# EUROPEAN PATENT APPLICATION

(11) **EP 4 322 319 A1**
(43) Date of publication of application: **14.02.2024**
(21) Application number: 22871131.3
(22) Date of filing: 20.12.2022
(51) Int. Cl.: H01M 50/552, H01M 50/188, H01M 50/586

(54) **ELECTROCHEMICAL DEVICE AND ELECTRONIC APPARATUS**

(30) Priority: 15.06.2022 CN 202210671239
(71) Applicant: Ningde Amperex Technology Ltd., Ningde City, Fujian Province 352100 (CN)
(72) Inventor: YANG, Jianhui, Ningde, Fujian 352100 (CN)
(74) Representative: Icosa
(86) International application number: PCT/CN2022/140413
(87) International publication number: WO 2023/240967

(57) **Abstract**

This application provides an electrochemical device and an electronic device. The electrochemical device includes: a housing, an insulator, a connecting strip, and a feedthrough connector. The housing defines an accommodation cavity and includes a cover. The cover includes a first wall face oriented toward the accommodation cavity and a second wall face away from the accommodation cavity. The cover includes a first through-hole that runs through the first wall face and the second wall face. The connecting strip is connected to the first wall face, the second wall face, or an inner wall of the first through-hole. A second through-hole of the connecting strip communicates with the first through-hole. The insulator is fitly connected to the connecting strip. The insulator includes a third through-hole communicating with the second through-hole. A first part of the feedthrough connector is fitly connected to a wall face of the insulator, the wall face being away from the connecting strip. The first part covers the third through-hole. One end of a second part of the feedthrough connector is connected to a wall face of the first part, the wall face being oriented toward the connecting strip. Another end of the second part is disposed at the first through-hole, the second through-hole, and the third through-hole separately. The electrochemical device according to this application is characterized by relatively high energy density and mounting precision, and relatively low production cost.

## Description

### CROSS-REFERENCE TO RELATED APPLICATIONS

This application claims priority to Chinese Patent Application No. 202210671239.6, filed with the Chinese Patent Office on June 15, 2022 and entitled "ELECTROCHEMICAL DEVICE AND ELECTRONIC DEVICE", which is incorporated herein by reference in its entirety.

### TECHNICAL FIELD

This application relates to the technical field of electrochemical devices, and in particular, to an electrochemical device and an electronic device.

### BACKGROUND

Electrode posts a hard-shell battery are usually fixed onto a housing of the hard-shell battery by riveting. The riveted structure of an electrode post usually includes a force-bearing metal gasket, an insulating and sealing plastic gasket, and an electrically conducting electrode post. The structure includes many components and is riveted in a complicated process. The manufacturing process of the structure demands a high precision, thereby increasing the manufacturing cost of the battery. Moreover, the riveted electrode post structure needs to occupy a relatively large space in the housing, thereby resulting in loss of the energy density of the battery.

### SUMMARY

An objective of this application is to provide an electrochemical device and an electronic device to at least reduce the manufacturing cost of the electrochemical device and increase the energy density of the electrochemical device.

A first aspect of this application provides an electrochemical device. The electrochemical device includes a housing, an insulator, a connecting strip, and a feedthrough connector. The housing defines an accommodation cavity and includes a cover. The cover includes a first wall face oriented toward the accommodation cavity and a second wall face being away from the accommodation cavity. The cover includes a first through-hole running through the first wall face and the second wall face. The connecting strip is connected to the first wall face or the second wall face or connected to an inner wall of the first through-hole. The connecting strip includes a second through-hole, and the second through-hole communicates with the first through-hole. The insulator is fitly connected to the connecting strip. The insulator includes a third through-hole, and the third through-hole communicates with the second through-hole. The feedthrough connector includes a first part and a second part. The first part is fitly connected to a wall face of the insulator, the wall face of the insulator is away from the connecting strip. The first part covers the third through-hole. One end of the second part is connected to a wall face of the first part, the wall face of the first part is oriented toward the connecting strip. Another end of the second part is disposed at the first through-hole, the second through-hole, and the third through-hole separately.

The insulator is connected to the cover by the connecting strip. Therefore, during mounting, the insulator may be snugly fixed to the connecting strip first, and then the connecting strip is connected to the first wall face or second wall face of the cover or the inner wall of the first through-hole. The first part of the feedthrough connector is directly fitly connected onto the insulator. During disassembling, the feedthrough connector and the insulator can be both detached from the cover by separating the connecting strip from the cover. Compared with a conventional electrode post riveting structure, this application uses fewer parts, thereby not only simplifying the manufacturing process, but also reducing the production cost of the electrochemical device, and effectively increasing the space of the accommodation cavity of the electrochemical device and increasing the energy density of the electrochemical device. In addition, the snug connection between the insulator and the connecting strip can be performed outside the accommodation cavity. The connecting by the connecting strip improves the mounting precision of the insulator. In addition, the connecting strip, the insulator, and the feedthrough connector, which are connected to the cover separately, can be removed separately. This connection manner is applicable to the housing of any electrochemical device, thereby facilitating standardization and universalization of the electrode post conduction structure of the electrochemical device.

As an improvement to the foregoing technical solution, the second part includes a protruding portion away from the first part. The protruding portion protrudes from the first through-hole. The protruding portion is located on a side of the cover, the side of the cover is away from the accommodation cavity, thereby facilitating electrical connection between the second part and an external circuit.

As an improvement to the foregoing solution, an end of the protruding portion, which is away from the first part, is bent toward a direction parallel to the second wall face. By bending one end of the protruding portion, the dimension of the second part in the third direction is reduced, and the connection area between the second part and the external circuit is increased.

As an improvement to the foregoing solution, as viewed along a direction perpendicular to the second wall face, the second part is located in a region of the second through-hole, the third through-hole, and the first through-hole. As viewed along the direction perpendicular to the second wall face, the second through-hole and the third through-hole are located in a region of the first through-hole.

As an improvement to the foregoing solution, the connecting strip is fitly connected to the first wall face, and a clearance between the second part and a wall of the first through-hole is greater than or equal to 0.05 mm, thereby preventing a short circuit caused by contact between the second part and the wall of the first through-hole.

As an improvement to the foregoing solution, a cross-section of the second part in a direction parallel to the second wall face is a first cross-section, a maximum dimension a₁ of the first cross-section is greater than or equal to 0.3 mm, and a minimum dimension bi of the first cross-section is greater than or equal to 0.3 mm.

As an improvement to the foregoing solution, the electrochemical device satisfies one of the following conditions (1) to (3):
(1) Both the first through-hole and the third through-hole are cylindrical holes, the second part is cylindrical, a diameter d₁ of the first through-hole, a diameter d₂ of the second part, and a diameter d₃ of the third through-hole satisfy: d₂ ≥ 0.3 mm, d₁ ≥ d₂ + 0.1 mm, and d₃ ≥ d₂. With the diameter of the second part being less than the diameter of the first through-hole, it is convenient to isolate and insulate the second part from the cover. Due to the insulation effect of the insulator, the diameter of the second part may be set to be less than or equal to the diameter of the third through-hole. When the diameter of the third through-hole is equal to the diameter of the second part, the insulator can serve a function of clamping the second part to stabilize the second part.
(2) Both the first through-hole and the third through-hole are kidney-shaped holes, oval holes, triangular holes, polygonal holes, or irregular special-shaped holes.
(3) Along a direction perpendicular to the second wall face, a thickness of the insulator is greater than or equal to 0.05 mm, a thickness of the first part is greater than or equal to 0.03 mm, and a thickness of the cover is greater than or equal to 0.03 mm. The thicknesses of the insulator, the first part, and the cover are all relatively small, thereby increasing the space of the accommodation cavity of the electrochemical device and increasing the energy density of the electrochemical device.

As an improvement to the foregoing solution, the connecting strip is fixedly connected to the first wall face. One side of the insulator is bonded to the connecting strip, and another side of the insulator is bonded to the first part. The thickness of the feedthrough connector and insulator connected by bonding is small in the second direction, thereby effectively increasing the space of the accommodation cavity of the electrochemical device, and increasing the energy density of the electrochemical device. In addition, fewer parts are used in the assembling, thereby simplifying the manufacturing process, and reducing the production cost of the electrochemical device.

As an improvement to the foregoing solution, an annular clearance exists between the cover and the second part. The annular clearance is arranged around the first through-hole. The insulator seals the annular clearance, thereby hermetically insulating the second part from the wall of the third through-hole while reducing the material.

Alternatively, an annular clearance exists between the first wall face and the second part, the annular clearance is arranged around the first through-hole, the electrochemical device further includes a sealing element, and the sealing element seals the annular clearance. By disposing the sealing element in the annular clearance, the wall of the first through-hole is hermetically insulated from the second part conveniently.

As an improvement to the foregoing solution, the electrochemical device satisfies at least one of the following conditions (4) to (6):
(4) a material of the housing includes stainless steel, Al, or Ni;
(5) a material of the insulator includes PP, polyphenylene sulfide (PPS), or soluble polytetrafluoroethylene (PFA); and
(6) a material of the feedthrough connector includes stainless steel, Al, Ni, or Cu.

According to a second aspect, this application further provides an electronic device. The electronic device includes the electrochemical device according to any one of the embodiments of the first aspect.

The foregoing description is merely an overview of the technical solutions of this application. Some specific embodiments of this application are described below illustratively to enable a clearer understanding of the technical solutions of this application, enable implementation of the technical solutions based on the subject-matter hereof, and make the foregoing and other objectives, features, and advantages of this application more evident and comprehensible.

### BRIEF DESCRIPTION OF DRAWINGS

To describe the technical solutions of the embodiments of this application more clearly, the following outlines the drawings used in the embodiments of this application. Evidently, the drawings outlined below are merely a part of embodiments of this application. A person of ordinary skill in the art may derive other drawings from the outlined drawings.
FIG. 1 is a partial exploded view of an electrochemical device according to some embodiments of this application;
FIG. 2 is a partial sectional view of an electrochemical device according to some embodiments of this application;
FIG. 3 is a top view of an electrochemical device viewed along a second direction according to some embodiments of this application;
FIG. 4 is a partial sectional view of an electrochemical device according to some embodiments of this application;
FIG. 5 is a partial sectional view of an electrochemical device according to some embodiments of this application;
FIG. 6a is a top view of an insulator viewed along a second direction according to some embodiments of this application;
FIG. 6b is a top view of a feedthrough connector viewed along a second direction according to some embodiments of this application;
FIG. 6c is a top view of an electrochemical device viewed along a second direction according to some embodiments of this application;
FIG. 7 is a partial exploded view of an electrochemical device according to some embodiments of this application;
FIG. 8a is a top view of an insulator viewed along a second direction according to some embodiments of this application;
FIG. 8b is a top view of a feedthrough connector viewed along a second direction according to some embodiments of this application;
FIG. 8c is a top view of an electrochemical device viewed along a second direction according to some embodiments of this application;
FIG. 9 is a partial sectional view of an electrochemical device according to some embodiments of this application;
FIG. 10a is a top view of an insulator viewed along a second direction according to some embodiments of this application;
FIG. 10b is a top view of a feedthrough connector viewed along a second direction according to some embodiments of this application;
FIG. 10c is a top view of an electrochemical device viewed along a second direction according to some embodiments of this application;
FIG. 11 is a schematic diagram of bending a protruding portion according to some embodiments of this application;
FIG. 12 is a partial sectional view of an electrochemical device according to some embodiments of this application;
FIG. 13 is a partial sectional view of an electrochemical device according to some embodiments of this application; and
FIG. 14 is a partial sectional view of an electrochemical device according to some embodiments of this application.

### Reference numerals:

100. electrochemical device;
10. housing; 11. accommodation cavity; 12. cover; 121. first wall face; 122. second wall face; 123. first through-hole;
20. insulator; 21. third through-hole;
30. connecting strip; 31. second through-hole;
40. feedthrough connector; 41. first part; 42. second part; 421. protruding portion;
50. annular clearance;
60. sealing element.

### DETAILED DESCRIPTION OF EMBODIMENTS

For ease of understanding this application, the following describes this application in more detail with reference to drawings and specific embodiments. It is hereby noted that an element referred to herein as being "fixed to" another element may be directly disposed on the other element, or may be fixed to the other element with one or more elements in between. An element referred to herein as "connected to" another element may be connected to the other element directly or with one or more elements in between. The terms "vertical", "horizontal", "left", "right", and other similar expressions used herein are merely for ease of description.

Unless otherwise defined, all technical and scientific terms used herein bear the same meanings as what is normally understood by a person skilled in the technical field of this application. The terms used in the specification of this application are merely intended to describe specific embodiments but not to limit this application. The term "and/or" used herein is intended to include any and all combinations of one or more relevant items recited.

In addition, to the extent that no mutual conflict occurs, the technical features described below in different embodiments of this application may be combined with each other.

In this specification, the meanings of "mounting" or "installation" include fixing or confining an element or unit to a specific position or place by welding/soldering, screwing, snap-fit connection, bonding, or other means, where the element or unit may be held stationary in the specific position or place or may move within a limited range, and the element or unit may be detachable or undetachable after being fixed or confined to the specific position or place, without being limited in embodiments of this application.

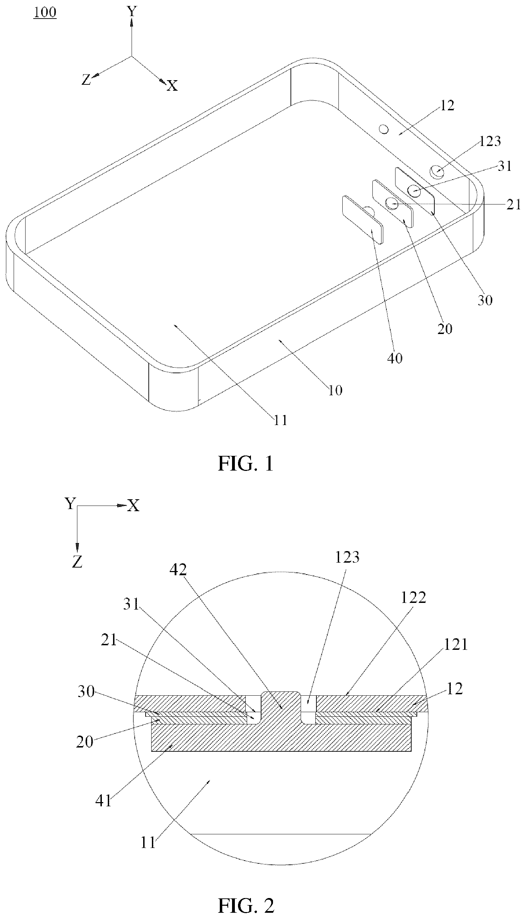

An embodiment of this application discloses an electrochemical device 100. Referring to FIG. 1 and FIG. 2, the electrochemical device 100 includes a housing 10, an insulator 20, a connecting strip 30, and a feedthrough connector 40. The insulator 20, the connecting strip 30, and the feedthrough connector 40 are electrode post conduction structures of the housing 10. A first through-hole 123 is made on the housing 10. The electrode post conduction structures are electrically connected to an external device through the first through-hole 123. It is hereby noted that, in this embodiment of this application, the electrochemical device 100 is a smallest unit that makes up a battery or a battery module, and is a site for conversion between electrical energy and chemical energy.

With respect to the housing 10, referring to FIG. 1 and FIG. 2, the housing 10 defines an accommodation cavity 11. The electrochemical device 100 further includes an electrode assembly (not shown in the drawing) and an electrolytic solution (not shown in the drawing). The electrode assembly and the electrolytic solution may be accommodated in the accommodation cavity 11. The housing 10 includes a cover 12. The cover 12 fits on the top of the housing 10. The cover 12 includes a first wall face 121 oriented toward the accommodation cavity 11 and a second wall face 122 away from the accommodation cavity 11. The first through-hole 123 is made on the cover 12. The first through-hole 123 communicates with the accommodation cavity 11. The first through-hole 123 runs through the first wall face 121 and the second wall face 122. Optionally, in some embodiments, the housing 10 is a structure formed by stamping and cutting a hard sheet, usually referred to as a hard shell. The hard sheet may be a metal material such as stainless steel, Al or Ni. The cover 12 is a part of the housing 10.

For the insulator 20, referring to FIG. 1 and FIG. 2, the insulator 20 is configured to isolate and insulate the cover 12 from the feedthrough connector 40. The insulator 20 includes a third through-hole 21. The third through-hole 21 communicates with the first through-hole 123 of the cover 12. In some embodiments, as viewed along the direction (the second direction Z) perpendicular to the second wall face 122, the third through-hole 21 is located in a region of the first through-hole 123. The first through-hole 123 may be disposed coaxial with the third through-hole 21. The feedthrough connector 40 may extend into the third through-hole 21 and the first through-hole 123.

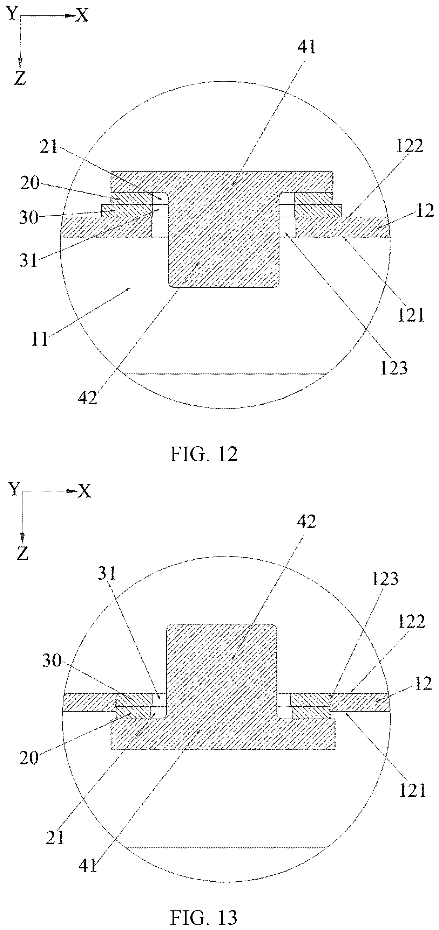

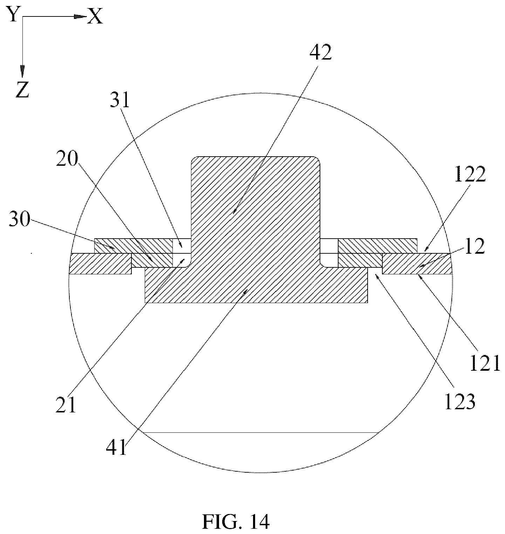

With respect to the connecting strip 30, referring to FIG. 1 and FIG. 2, the connecting strip 30 is connected to the insulator 20 and the cover 12. For example, the connecting strip 30 may be fitly connected to the first wall face 121 or the second wall face 122 of the cover 12, or connected to the inner wall of the first through-hole 123. FIG. 12 and FIG. 14 show how the connecting strip 30 is connected to the second wall face 122. As shown in FIG. 12 and FIG. 14, the electrode post conduction structures can be removed from the outside directly. FIG. 13 shows how the connecting strip 30 is connected to the inner wall of the first through-hole 123. A second through-hole 31 is made on the connecting strip 30. The second through-hole 31 communicates with the first through-hole 123 and the third through-hole 21 separately. The second through-hole 31 is disposed coaxial with the third through-hole 21. In some embodiments, as viewed along the direction perpendicular to the second wall face 122, the second through-hole 31 and the third through-hole 21 are located in a region of the first through-hole 123. During mounting, the connecting strip 30 may be fixedly connected onto the insulator 20 first, and then the connecting strip 30 is fixed to the first wall face 121 of the cover 12, and the connecting strip 30 may be fixed to the second wall face 122 of the cover, or the connecting strip 30 may be fixed to the inner wall of the first through-hole 123. In some embodiments, the insulator 20 is a plastic sheet such as PP, PPS, PFA, or another material. The connecting strip 30 may be a hard metal sheet. The insulator 20 may be directly attached onto the hard metal connecting strip 30 by bonding. The metal connecting strip 30 may be fixed onto the first wall face 121 of the cover 12 by bonding, screwing, or snap-fastening. Later, the entire insulator 20 can be detached from the cover 12 by removing the metal connecting strip 30. The insulator 20 may be bonded to the metal connecting strip 30 outside the electrochemical device 100 in advance. The entire insulator 20 can be fixed by fixing the connecting strip 30, thereby meeting the high-precision mounting requirements of the electrochemical device 100.

With respect to the feedthrough connector 40, in some embodiments, the electrochemical device 100 is a hard-shell battery, and the feedthrough connector 40 may serve as a positive lead-out piece of the hard-shell battery. The hard-shell battery differs from an aluminum-plastic film battery in that the hard-shell battery is a one-layer structure, that is, a metal hard sheet, but the aluminum-plastic film is a three-layer structure including a nylon layer, an aluminum layer, and a PP layer. Because the hard shell includes no nylon layer or PP layer, the hard shell itself may be used as a negative electrode, and a positive electrode of the battery may be isolated from the hard shell body by hermetically insulating.

Referring to FIG. 1 and FIG. 2, the feedthrough connector 40 includes a first part 41 and a second part 42 connected to each other. The first part 41 is disposed in the accommodation cavity 11 of the housing 10, and is configured to be connected to an electrode assembly. The first part 41 is fitly connected to the wall face of the insulator 20, the wall face being away from the connecting strip 30. Due to the function of the insulator 20, the first part 41 is isolated and insulated from the housing 10. The second part 42 is connected to the wall face of the first part 41, the wall face being oriented toward the connecting strip 30. The connection is implemented by means including but not limited to welding, screwing, or clamping. Optionally, in some embodiments, the second part 42 and the first part 41 are formed in one piece. Along the first direction X, the dimension of the first part 41 is larger than the dimension of the first through-hole 123 and the third through-hole 21. The first part 41 covers the third through-hole 21. When the second part 42 extends into the first through-hole 123 or the third through-hole 21, the first part 41 can limit the position of the entire feedthrough connector 40. One end of the second part 42 is connected to the wall face of the first part 41, the wall face of the first part 41 is oriented toward the connecting strip 30. Another end of the second part 42 is disposed at the first through-hole 123, the third through-hole 21, and the second through-hole 31 separately. As viewed along the second direction Z, the second part 42 is located in a region of the third through-hole 21, the second through-hole 31, and the first through-hole 123. The second part 42 is configured to be connected to an external device, so that the external device is electrically connected to the electrochemical device 100. In this embodiment, the feedthrough connector 40 is an electrode post of the electrochemical device 100, and may be made of a material such as stainless steel, Al, Ni, or Cu.

In an embodiment of this application, the insulator 20 is connected by the connecting strip 30 to the first wall face 121 or the second wall face 122, or to the inner wall of the first through-hole 123. During mounting, the insulator 20 may be snugly fixed to the connecting strip 30 first, and then the connecting strip 30 is connected to the cover 12. The first part 41 of the feedthrough connector 40 is directly fitly connected onto the insulator 20. During disassembling, the feedthrough connector 40 and the insulator 20 can be both detached from the cover 12 by separating the connecting strip 30 from the cover 12. Compared with a conventional electrode post riveting structure, this application uses fewer parts, thereby not only simplifying the manufacturing process, but also reducing the production cost of the electrochemical device 100, and effectively increasing the space of the accommodation cavity 11 of the electrochemical device 100 and increasing the energy density of the electrochemical device 100. In addition, the snug connection between the insulator 20 and the connecting strip 30 can be performed outside the accommodation cavity 11. The connecting by the connecting strip 30 improves the mounting precision of the insulator 20. In addition, the connecting strip 30, the insulator 20, and the feedthrough connector 40, which are connected to the cover 12 separately, can be removed separately. This connection manner is applicable to the housing 10 of any electrochemical device 100, thereby facilitating standardization and universalization of the electrode post conduction structure of the electrochemical device 100.

According to some embodiments of this application, referring to FIG. 2, the connecting strip 30 is fixedly connected to the first wall face 121. One side of the insulator 20 is bonded to the connecting strip 30, and the other side is bonded to the first part 41, so that the feedthrough connector 40 is fixed to the cover 12. The thickness of the feedthrough connector 40 and insulator 20 connected by bonding is small in the second direction, thereby effectively increasing the space of the accommodation cavity 11 of the electrochemical device 100, and increasing the energy density of the electrochemical device 100. In addition, fewer parts are used in the assembling in the form of bonding, thereby reducing the production cost of the electrochemical device 100. Similarly, the feedthrough connector 40 in FIG. 12 may also be connected by bonding.

With respect to the shapes of the first through-hole 123, the second through-hole 31, and the third through-hole 21, all the first through-hole 123, the second through-hole 31, and the third through-hole 21 may be cylindrical holes, kidney-shaped holes, oval holes, triangular holes, quadrilateral holes, polygonal holes, irregular special-shaped holes, or the like. In some embodiments, the second part 42 needs to pass through and out of the third through-hole 21, the second through-hole 31, and the first through-hole 123. The shape of the second part 42 fits with the shape of the first through-hole 123, the second through-hole 31, and the third through-hole 21. To prevent a short circuit caused by contact between the second part 42 and the wall of the first through-hole 123, referring to FIG. 2, a clearance is reserved between the second part 42 and the wall of the first through-hole 123, so as to isolate the second part 42 from the wall of the first through-hole 123. Optionally, the clearance between the second part 42 and the wall of the first through-hole 123 is greater than or equal to 0.05 mm. The clearance of 0.05 mm is enough to ensure the isolation and insulation between the second part 42 and the wall of the first through-hole 123. The third through-hole 21 is conformal to the second through-hole 31 in shape. Similarly, when the connecting strip 30 is electrically conductive, a clearance is also reserved between the second part 42 and the wall of the second through-hole 31.

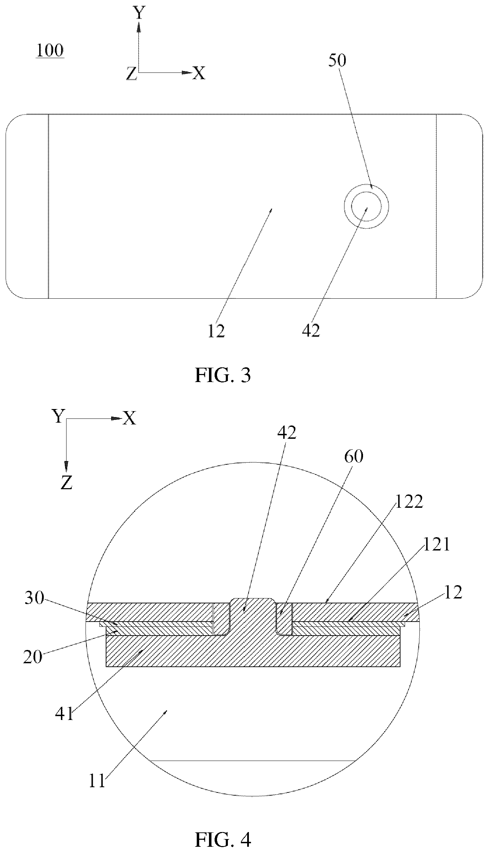

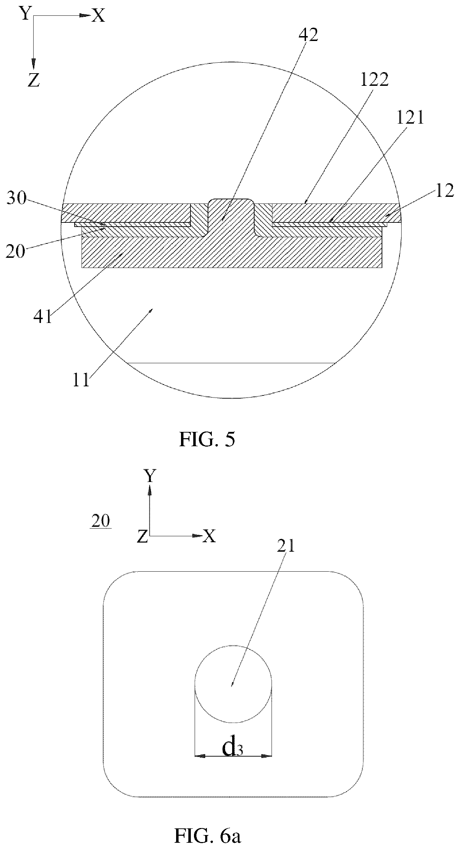

Further, referring to FIG. 2 and FIG. 3, an annular clearance 50 exists between the cover 12 and the second part 42. The annular clearance 50 is arranged around the first through-hole 123. Referring to FIG. 2 to FIG. 4, the electrochemical device 100 further includes a sealing element 60. The sealing element 60 is disposed in the annular clearance 50. The sealing element 60 is configured to seal the annular clearance 50. By disposing the sealing element 60 in the annular clearance 50, the wall of the first through-hole 123 is hermetically insulated from the second part 42 conveniently. The material of the sealing element 60 may be the same as the material of the insulator 20. Optionally, still referring to FIG. 5, in order to reduce production materials, the annular gap 50 may be hermetically insulated by the insulator 20 directly. That is, the insulator 20 extends into the annular clearance 50 to isolate the second part 42 from the wall of the first through-hole 123; or, in other embodiments, the sealing element 60 and the insulator 20 are formed in one piece.

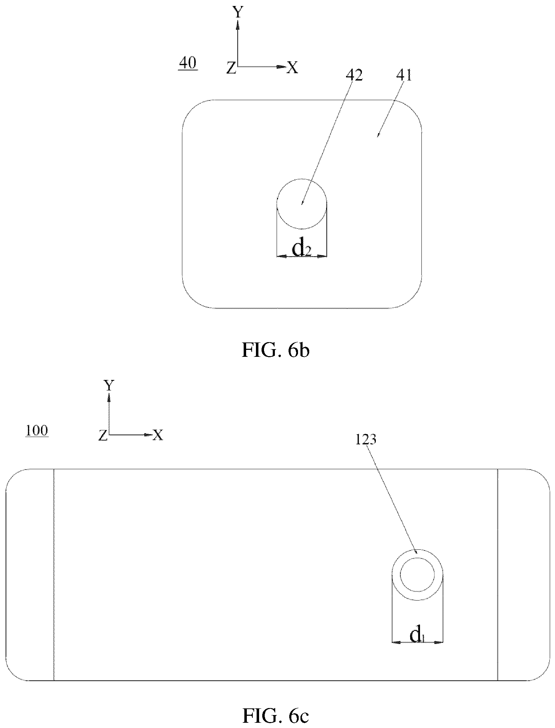

In some embodiments, referring to FIG. 2 and FIG. 6a to FIG. 6c, both the first through-hole 123 and the third through-hole 21 are cylindrical holes. The second part 42 fits with the first through-hole 123 and the third through-hole 21, that is, the second part 42 is cylindrical. The diameter d₁ of the first through-hole 123, the diameter d₂ of the second part 42, and the diameter d₃ of the third through-hole 21 satisfy: d₂ ≥ 0.3 mm, d₁ ≥ d₂ + 0.1 mm, and d₃ ≥ d₂. The diameter of the second part 42 is less than the diameter of the first through-hole 123 to facilitate isolation and insulation between the second part 42 and the cover 12. Due to the insulation effect of the insulator 20, the diameter of the second part 42 may be set to be less than or equal to the diameter of the third through-hole 21. When the diameter of the third through-hole 21 is equal to the diameter of the second part 42, the insulator 20 can serve a function of clamping the second part 42 to stabilize the second part 42.

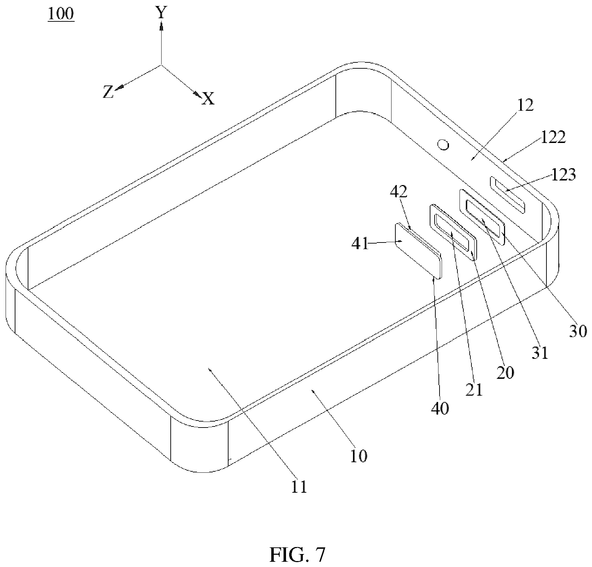

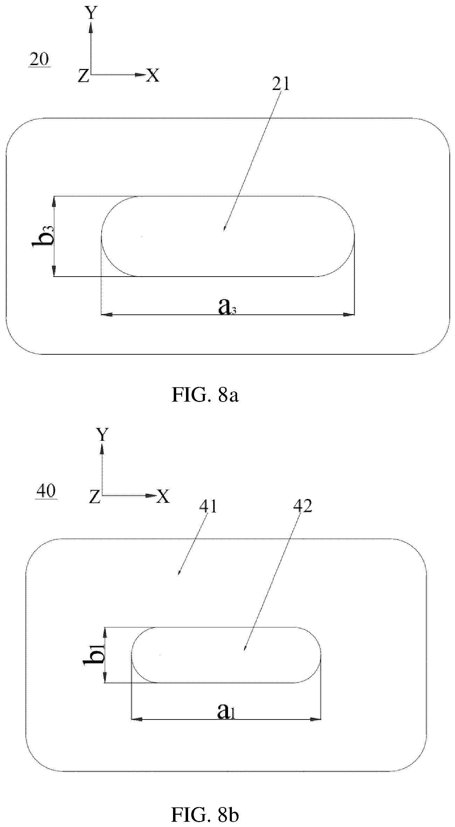

In some embodiments, referring to FIG. 7 to FIG. 8c, both the first through-hole 123 and the third through-hole 21 are kidney-shaped holes. Along the first direction X, both ends of the first through-hole 123 and the third through-hole 21 are arc-shaped. The second part 42 fits with the first through-hole 123 and the third through-hole 21, and the second part 42 is kidney-shaped. The second part 42 protrudes from the third through-hole 21 and the first through-hole 123 and protrudes beyond the second wall face 122 of the cover 12. A cross-section of the second part 42 in a direction parallel to the second wall face 122 is a first cross-section, a maximum dimension a₁ of the first cross-section is greater than or equal to 0.3 mm, and a minimum dimension bi of the first cross-section is greater than or equal to 0.3 mm. Specifically, as viewed along the second direction Z, in the first direction X, the length of the second part 42 is a₁, the length of the first through-hole 123 is a₂, and the length of the third through-hole 21 is a₃; in the third direction Y, the width of the second part 42 is b₁, the width of the first through-hole 123 is b₂, and the width of the third through-hole 21 is b₃, satisfying: a₁ ≥ 0.3 mm, bi ≥ 0.3 mm, a₂ ≥ a₁ + 0.1 mm, b₂ ≥ b₁ + 0.1 mm, a₃ ≥ a₁, and b₃ ≥ b₁. In some other embodiments, in order to adapt to a flattened electrochemical device 100, the length a₁ of the second part 42 is generally greater than the width bi of the second part 42. In the embodiments described above, the dimension of the second part 42 is smaller than the dimension of the first through-hole 123 to enable isolation and insulation between the second part 42 and the cover 12. The diameter of the second part 42 may be set to be less than or equal to the diameter of the third through-hole 21, so that the insulator 20 serves a function of clamping and stabilizing the second part 42.

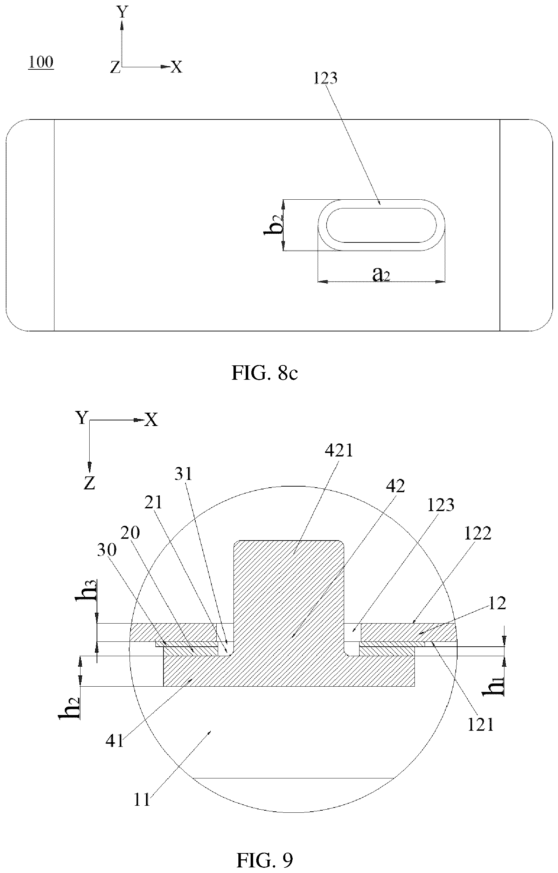

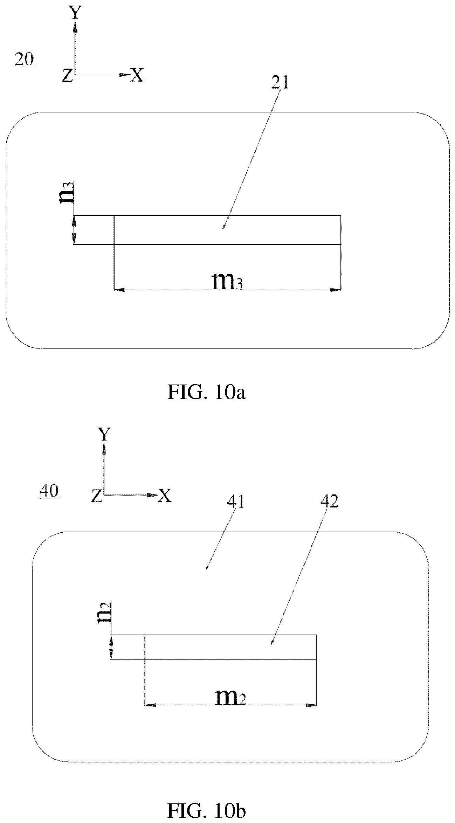

In some embodiments, referring to FIG. 9 to FIG. 10c, both the first through-hole 123 and the third through-hole 21 are elongated quadrilateral holes. The second part 42 is in a strip shape that fits with the first through-hole 123 and the third through-hole 21. The second part 42 includes a protruding portion 421 away from the first part 41. The protruding portion 421 extends away from the first part 41 and protrudes out of the first through-hole 123. The protruding portion 421 is located on a side of the cover 12, the side of the cover 12 is away from the accommodation cavity 11. In the embodiments described above, the protruding portion 421 protrudes from the second wall face 122 so as to be electrically connected to an external circuit. As viewed along the second direction Z, in the first direction X, the length of the first through-hole 123 is m₁, the length of the protruding portion 421 is m₂, and the length of the third through-hole 21 is m₃; along the third direction Y, the width of the first through-hole 123 is m₁, the width of the protruding portion 421 is n₂, and the width of the third through-hole 21 is n₃, satisfying: m₂ ≥ 0.05 mm, n₂ ≥ 0.05 mm, m₁ ≥ m₂ + 0.1 mm, n₁ ≥ n₂ + 0.1 mm, m₃ ≥ m₂, and n₃ ≥ n₂. This setting facilitates insulation between the second part 42 and the wall of the first through-hole 123, where m₂ may be set to be greater than or equal to 0.3 mm instead.

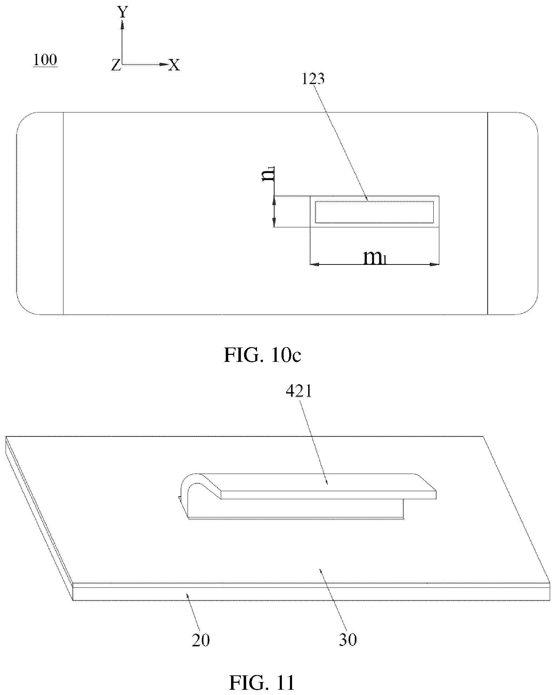

Further, referring to FIG. 9 and FIG. 11, an end of the protruding portion 421, which is away from the first part 41, is bent toward a direction parallel to the second wall face 122. In the embodiments described above, by bending one end of the protruding portion 421, the dimension of the second part 42 in the third direction is reduced, and the connection area between the second part 42 and the external circuit is increased, so as to facilitate electrical connection between the second part 42 and an external circuit.

According to some embodiments of this application, referring to FIG. 9 to FIG. 10c, along the second direction Z, the thickness h₁ of the insulator 20 is greater than or equal to 0.05 mm, the thickness h₂ of the first part 41 is greater than or equal to 0.03 mm, and the thickness h₃ of the cover 12 is greater than or equal to 0.03 mm. The thicknesses of the insulator 20, the first part 41, and the cover 12 are all relatively small, thereby increasing the space of the accommodation cavity 11 of the electrochemical device 100, enabling the accommodation cavity 11 to hold a larger electrode assembly, and increasing the energy density of the electrochemical device 100. With respect to the thickness of the connecting strip 30, the connecting strip 30 is a layer of thin sheet that snugly fits on the insulator 20, and may be set to be greater than or equal to 0.03 mm in thickness. If the thickness is less than 0.03 mm, the connecting strip 30 can hardly be fixed to the cover 12 by welding.

In some embodiments, the connecting strip 30 may be connected to the first wall face 121 or second wall face 122 of the cover 12. The dimension of the first through-hole 123 on the cover 12 needs to be set to be greater than or equal to the dimension of the second through-hole 31 of the connecting strip 30, and the dimension of the connecting strip 30 needs to be greater than or equal to the dimension of the insulator 20. Using a quadrilateral connecting strip 30 as an example, as shown in FIG. 2 or FIG. 9, when the connecting strip 30 is connected, on a side close to the first through-hole 123, to the first wall face 121 on the cover 12 by lap welding, the dimension of the first through-hole 123 is larger than the dimension of the second through-hole 31 by at least 0.1 mm (for example, when the first through-hole 123 is disposed coaxial with the third through-hole 21, the length of the first through-hole 123 is greater than the length of the second through-hole 31 by at least 0.1 mm, and the width of the first through-hole 123 is greater than the width of the second through-hole 31 by at least 0.1 mm; when the two through-holes are cylindrical, the diameter of the first through-hole 123 is greater than the diameter of the second through-hole 31 by at least 0.1 mm). The dimension of the connecting strip 30 is greater than or equal to the dimension of the insulator 20, so as to facilitate the welding between the connecting strip 30 and the cover 12 and improve the stability connection between the connecting strip and the cover. As shown in FIG. 2 or FIG. 4, when the connecting strip 30 is connected to the first wall face 121 of the cover 12 by penetration welding, the dimension of the first through-hole 123 may be set to be greater than or equal to the dimension of the second through-hole 31, and the dimension of the connecting strip 30 is greater than or equal to the dimension of the insulator 20. When the connecting strip 30 is connected, on a side away from the first through-hole 123, to the first wall face 121 of the cover 12 by lap welding, the dimension of the second through-hole 31 is greater than or equal to the dimension of the first through-hole 123, the length of the connecting strip 30 is greater than the length of the insulator 20 by at least 0.1 mm, and the width of the connecting strip 30 is greater than the width of the insulator 20 by at least 0.1 mm, so as to facilitate the welding between the connecting strip 30 and the cover 12 and improve the stability of connection between the connecting strip and the cover.

In some embodiments, as shown in FIG. 12, the connecting strip 30 may be connected to the second wall face 122 of the cover 12. To be specific, the first part 41, the insulator 20, and the connecting strip 30 are disposed in sequence in a direction from the outside of the cover 12 to the accommodation cavity 11, and the second part 42 is disposed toward the accommodation cavity 11. In this case, when the connecting strip 30 is connected, on the side away from the second part 42, to the second wall face 122 by lap welding, the dimension of the connecting strip 30 needs to be larger than the dimension of the insulator 20 by at least 0.1 mm, so as to facilitate the welding between the connecting strip 30 and the cover 12 and improve the stability of connection between the connecting strip and the cover, and the dimension of the first through-hole 123 may be greater than or equal to the dimension of the second through-hole 31. When the connecting strip 30 is connected to the second wall face 122 by penetration welding, the dimension of the connecting strip 30 may be greater than or equal to the dimension of the insulator 20. In this case, the dimension of the first through-hole 123 may be greater than or equal to the dimension of the second through-hole 31.

In some embodiments, as shown in FIG. 13, when the dimension of the first through-hole 123 is larger than the dimension of the second through-hole 31, the entire connecting strip 30 may be disposed in the first through-hole 123, and then welded to the inner wall of the first through-hole 123 by seam welding. The length of the connecting strip 30 is greater than the length of the insulator 20 by at least 0.1 mm. The width of the connecting strip 30 is greater than the width of the insulator 20 by at least 0.1 mm. In some embodiments, when the connecting strip 30 is seam-welded to an end face of the cover 12, the end face of the cover 12 is connected to the first through-hole 123, the thickness of the connecting strip 30 may be less than the thickness of the cover 12. In another embodiment, as shown in FIG. 14, when the dimension of the first through-hole 123 is larger than the dimension of the third through-hole 21, the entire insulator 20 may be disposed in the first through-hole 123, and then the insulator 20 is bonded to the inner wall of the first through-hole 123. The connecting strip 30 is lap-welded to the second wall face 122 of the cover 12. In this case, the dimension of the connecting strip 30 is greater than the dimension of the insulator 20. It is hereby noted that, the foregoing embodiment gives a description just by using an example in which the connecting strip 30 is welded to the cover 12. In some other embodiments, the connection may be implemented by bonding, snap-fastening, or the like.

An embodiment of this application further discloses an electronic device. The electronic device includes the electrochemical device 100 according to any one of the foregoing embodiments. The electronic device is not particularly limited in this application, and may be any electronic device known in the prior art. For example, the electronic device includes, but is not limited to, a Bluetooth headset, a mobile phone, a tablet, a notebook computer, an electric toy, an electric tool, an electric power cart, an electric vehicle, a ship, a spacecraft, and the like. The electric toy may include stationary or mobile electric toys, such as a game console, an electric car toy, an electric ship toy, an electric airplane toy, and the like. The spacecraft may include an airplane, a rocket, a space shuttle, a spaceship, and the like.

It is hereby noted that although preferred embodiments of this application have been given in the specification and drawings of this application, this application may be implemented in many different forms, without being limited to the embodiments described herein. The embodiments are not intended to limit the content of this application, but merely to facilitate thorough and comprehensive understanding of the content disclosed herein. In addition, all kinds of embodiments that are not enumerated above but are derived by further combination of the foregoing technical features still fall within the scope covered by this application. Further, all improvements and variations, which may be made by a person of ordinary skill in the art based on the foregoing description, still fall within the protection scope of the claims appended hereto.

## Claims

1. An electrochemical device, **characterized in that** the electrochemical device comprises:
a housing, wherein the housing defines an accommodation cavity and comprises a cover, the cover comprises a first wall face oriented toward the accommodation cavity and a second wall face being away from the accommodation cavity, and the cover comprises a first through-hole running through the first wall face and the second wall face;
a connecting strip, connected to the first wall face or the second wall face or connected to an inner wall of the first through-hole, wherein the connecting strip comprises a second through-hole, and the second through-hole communicates with the first through-hole;
an insulator, fitly connected to the connecting strip, wherein the insulator comprises a third through-hole, and the third through-hole communicates with the second through-hole; and
a feedthrough connector, comprising a first part and a second part, wherein the first part is fitly connected to a wall face of the insulator, the wall face of the insulator being away from the connecting strip, the first part covers the third through-hole, one end of the second part is connected to a wall face of the first part, the wall face of the first part is oriented toward the connecting strip, and another end of the second part is disposed at the first through-hole, the second through-hole, and the third through-hole separately.

2. The electrochemical device according to claim 1, **characterized in that** the second part comprises a protruding portion away from the first part, the protruding portion protrudes from the first through-hole, and the protruding portion is located on a side of the cover, and the side of the cover is away from the accommodation cavity.

3. The electrochemical device according to claim 2, **characterized in that** an end of the protruding portion is away from the first part and is bent toward a direction parallel to the second wall face.

4. The electrochemical device according to claim 1, **characterized in that**, as viewed along a direction perpendicular to the second wall face, the second part is located in a region of the second through-hole, the third through-hole, and the first through-hole.

5. The electrochemical device according to claim 4, **characterized in that**, as viewed along the direction perpendicular to the second wall face, the second through-hole and the third through-hole are located in a region of the first through-hole.

6. The electrochemical device according to claim 1, **characterized in that** the connecting strip is fitly connected to the first wall face, and a clearance between the second part and a wall of the first through-hole is greater than or equal to 0.05 mm.

7. The electrochemical device according to claim 1, **characterized in that** a cross-section of the second part in a direction parallel to the second wall face is a first cross-section, a maximum dimension a₁ of the first cross-section is greater than or equal to 0.3 mm, and a minimum dimension bi of the first cross-section is greater than or equal to 0.3 mm.

8. The electrochemical device according to claim 1, **characterized in that** one of the following conditions (1) to (3) is satisfied:
(1) both the first through-hole and the third through-hole are cylindrical holes, the second part is cylindrical, a diameter d₁ of the first through-hole, a diameter d₂ of the second part, and a diameter d₃ of the third through-hole satisfy: d₂ ≥ 0.3 mm, d₁ ≥ d₂ + 0.1 mm, and d₃ ≥ d₂;
(2) both the first through-hole and the third through-hole are kidney-shaped holes, oval holes, triangular holes, polygonal holes, or irregular special-shaped holes; and
(3) along a direction perpendicular to the second wall face, a thickness of the insulator is greater than or equal to 0.05 mm, a thickness of the first part is greater than or equal to 0.03 mm, and a thickness of the cover is greater than or equal to 0.03 mm.

9. The electrochemical device according to any one of claims 1 to 8, **characterized in that** the connecting strip is fixedly connected to the first wall face, one side of the insulator is bonded to the connecting strip, and another side of the insulator is bonded to the first part.

10. The electrochemical device according to any one of claims 1 to 8, **characterized in that** an annular clearance exists between the cover and the second part, the annular clearance is arranged around the first through-hole, and the insulator seals the annular clearance;
or,
an annular clearance exists between the first wall face and the second part, the annular clearance is arranged around the first through-hole, the electrochemical device further comprises a sealing element, and the sealing element seals the annular clearance.

11. The electrochemical device according to claim 1, **characterized in that** at least one of the following conditions (4) to (6) is satisfied:
(4) a material of the housing comprises stainless steel, Al, or Ni;
(5) a material of the insulator comprises PP, PPS, or PFA; and
(6) a material of the feedthrough connector comprises stainless steel, Al, Ni, or Cu.

12. An electronic device, **characterized in that** the electronic device comprises the electrochemical device according to any one of claims 1 to 11.
